Europäisches Patentamt

European Patent Office

Office européen des brevets

(19)

(11) **EP 0 627 492 B1**

(12) **FASCICULE DE BREVET EUROPEEN**

(45) Date de publication et mention
de la délivrance du brevet:
**11.09.1996 Bulletin 1996/37**

(51) Int Cl.⁶: **C21C 5/52**, F27B 3/22

(21) Numéro de dépôt: **94401136.0**

(22) Date de dépôt: **24.05.1994**

(54) **Four de fusion à injecteur de gaz**

Schmelzofen mit Gaseinjektor

Smelting furnace with gas injector

(84) Etats contractants désignés:
**AT BE DE DK ES GB GR IT LU NL PT SE**

(30) Priorité: **02.06.1993 FR 9306562**

(43) Date de publication de la demande:
**07.12.1994 Bulletin 1994/49**

(73) Titulaire: **L'AIR LIQUIDE, SOCIETE ANONYME POUR
L'ETUDE ET L'EXPLOITATION DES PROCEDES
GEORGES CLAUDE
F-75321 Paris Cédex 07 (FR)**

(72) Inventeur: **Perrin, Nicolas, Résidence Dauphine
F-78430 Louvciennes (FR)**

(74) Mandataire: **Le Moenner, Gabriel et al
L'AIR LIQUIDE
75, Quai d'Orsay
75321 Paris Cédex 07 (FR)**

(56) Documents cités:
**EP-A- 0 257 450        EP-A- 0 462 898
FR-A- 2 372 231         US-A- 2 781 190
US-A- 3 459 867         US-A- 4 171 798**

## Description

La présente invention est relative à un four de fusion de charge et, plus particulièrement, à un tel four comprenant un espace surplombant une charge dans lequel débouche au moins un injecteur de gaz oxygéné traversant l'enceinte du four pour délivrer dans cet espace un jet de gaz non radial par rapport à l'axe vertical central du four. La présente invention est aussi relative à un injecteur de gaz conçu pour un tel four.

On connaît du document aux US-A- 5,166,950, au nom de la demanderesse et ci-après appelé "brevet précité", un procédé et une installation de fusion d'une charge en four, notamment en four électrique de fusion de ferrailles pour la production d'acier, par apport d'énergie de fusion à la charge et avec post-combustion des fumées par injection d'un gaz oxygéné dans un espace du four situé au-dessus de la charge.

Aux figures 1 et 2 du brevet précité on a représenté un four à paroi latérale sensiblement circulaire traversée obliquement par deux jeux d'injecteurs droits de gaz oxygéné, ces injecteurs étant orientés dans des directions sensiblement horizontales et non radiales par rapport à l'axe vertical du four, de manière à créer des courants de gaz rotatifs tournant en sens inverses dans l'espace du four situé au-dessus de la charge. On assure ainsi un mélange efficace du gaz oxygéné avec des gaz combustibles (CO, $H_2$) issus de la charge de manière à provoquer une post-combustion homogène de ces gaz dans le four, qui contribue à la fusion de cette charge, en coopération avec des électrodes verticales distribuées autour et au voisinage de l'axe vertical du four.

Il faut évidemment prévoir, dans la paroi latérale du four, des passages pour les injecteurs. Avec des injecteurs droits et traversant obliquement cette paroi, comme représenté dans le document précité, on comprend que les passages à prévoir doivent être relativement larges, d'autant que ceux-ci doivent autoriser de nécessaires réglages de la position de l'axe de l'injecteur dans toutes les directions de l'espace, cette position pouvant varier d'un type de four à un autre. La présence de larges passages dans la paroi latérale d'un four constitue évidemment un inconvénient, amplifié quand on accroît le nombre des injecteurs pour améliorer le brassage des gaz utilisés dans la post-combustion.

Les injecteurs du four du brevet précité débordent en outre largement dans l'enceinte du four. Si celui-ci est alimenté verticalement par de la ferraille à fondre, des pièces de ferraille peuvent alors endommager les extrémités des injecteurs en percutant celles-ci pendant leur chute. Ces extrémités protubérantes sont aussi menacées par des bouchages dues à des projections de laitier ou de métal venu de la masse en fusion.

La présente invention a donc pour but de réaliser un four de fusion de charge qui ne présente pas ces inconvénients et qui, en particulier, présente des passages, pour les injecteurs de gaz oxygéné, de surface aussi limitée que possible tout en autorisant une injection non radiale de ce gaz.

La présente invention a aussi pour but de réaliser un tel four dans lequel les injecteurs de gaz sont conçus de manière à être bien protégés tant des chutes de ferraille que des projections de laitier ou de métal en fusion.

La présente invention a encore pour but de réaliser un tel four à durée de vie accrue, par réduction des risques d'oxydation des électrodes ou de perçage de la paroi du four sous l'action des jets de gaz sortant des injecteurs. La présente invention a également pour but d'accroître la durée de vie des injecteurs eux-mêmes et de clapets anti-retour disposés en aval de canalisations de gaz alimentant les injecteurs.

On atteint ces buts de l'invention avec un four de fusion de charge comportant les caractéristiques de la revendication 1.

Grâce à la disposition de l'injecteur dans le four selon l'invention , on diminue l'encombrement latéral de l'injecteur au niveau de la paroi de l'enceinte du four, par rapport à celui d'un injecteur "droit" et on diminue donc les dimensions correspondantes du passage à ménager dans cette paroi pour la traversée de l'injecteur.

Suivant une autre caractéristique du four selon l'invention, celui-ci comprend des moyens de support en prise avec le corps de l'injecteur, autorisant une rotation de l'injecteur autour de l'axe de son corps. On peut ainsi régler simplement l'orientation du jet de gaz sortant de l'injecteur, pour l'adapter par exemple à tel ou tel type de four.

D'autres caractéristiques et avantages de la présente invention sont définis dans les revendications 2 à 9 et apparaîtront à la lecture de la description qui va suivre et à l'examen du dessin annexé dans lequel :

- la figure 1 est une vue schématique, en coupe transversale, du four suivant l'invention, et
- la figure 2 est une vue en coupe axiale d'un injecteur de gaz oxygéné conçu pour équiper le four de la figure 1.

Le four représenté à cette figure est du type de celui décrit au brevet précité auquel on pourra se référer pour plus de détails concernant ses dispositions générales.

C'est ainsi que, dans l'exemple représenté, ce four comprend, entre une sole et une voûte, une paroi latérale 1 cylindrique formant partie de l'enceinte du four et munie d'une porte dite de décrassage 2 et d'un bec de coulée 3 des produits de fusion, trois électrodes 4,5,6 régulièrement réparties autour de l'axe vertical X du four.

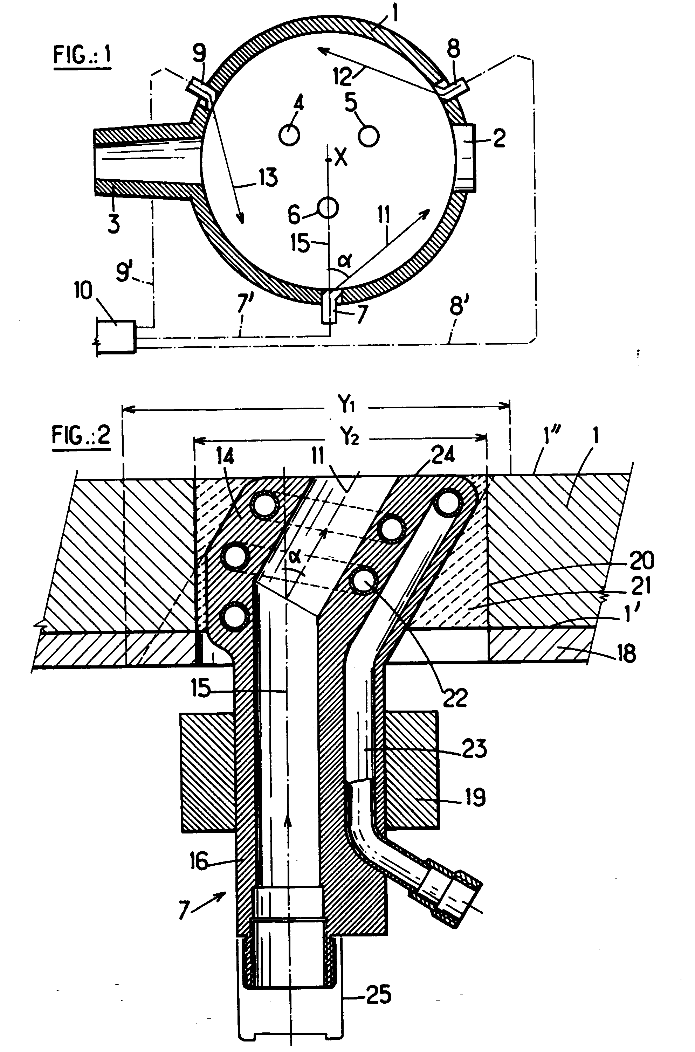

Le four comprend une pluralité d'injecteurs de gaz qui peuvent, comme dans le brevet précité, être répartis en plusieurs séries étagées dans le four. Pour la clarté de la figure 1 on n'a représenté qu'une seule série de tels injecteurs 7,8,9 alimentés en gaz par des canalisations 7',8',9' respectivement, connectés à une source 10 de gaz oxygéné ou d'oxygène. Comme dans le brevet précité, les injecteurs 7,8,9 soufflent le gaz oxygéné dans le four suivant des directions 11,12,13 respectivement, non radiales, dites "tangentielles", établissant une circulation de gaz dans le sens contraire de celui des aiguilles d'une montre, du point de vue de la figure. Des séries adjacentes d'injecteurs, placées par exemple au-dessus ou en dessous de celle représentée à la figure 1, établissent des circulations de gaz de sens contraire, suivant les enseignements du brevet précité.

On se réfère maintenant à la figure 2 du dessin annexé où il apparaît que l'un quelconque des injecteurs 7,8,9, par exemple l'injecteur 7, comprend une tête 14 disposée dans l'épaisseur de la paroi 1 du four et présentant un passage de gaz sensiblement cylindrique d'axe 11 incliné d'un angle α sur un axe 15 radial par rapport à l'axe vertical X du four repéré sur la figure 1.

La tête 14 est formée à l'extrémité d'un corps généralement cylindrique 16 d'axe confondu avec l'axe 15 quand l'injecteur est monté sur le four, ce corps étant creusé d'un passage de gaz prolongeant celui d'axe 11 qui traverse la tête, le corps débordant ainsi de la surface extérieure 1' de la paroi 1 du four, paroi portée classiquement par une structure de support 18 schématiquement représentée à la figure 2.

Suivant l'invention encore, le corps 16 de l'injecteur est monté à rotation autour de l'axe 15 dans un palier 19 de support, également schématiquement représenté à cette figure.

Un clapet anti-retour 25, schématiquement représenté sur la figure 2, est monté sur l'injecteur en aval d'une canalisation d'alimentation en gaz oxygéné. Il est destiné à arrêter d'éventuelles projections de laitier ou de métal pour éviter tout risque de combustion dans la canalisation.

Sur cette figure il apparaît que la paroi 1 du four est percée d'un passage ou fenêtre 20 dimensionné de manière à s'accommoder de l'encombrement de la tête 14 de l'injecteur. Une fois cette tête mise en place dans cette fenêtre, et sa position précisément réglée, l'espace 21 demeurant libre entre la paroi du four et la tête 14 est rempli par un matériau réfractaire convenable, ou par une pièce refroidie à l'eau, par exemple, pour fermer le four au niveau de l'injecteur.

Sur la figure 2 on a repéré par $y_1$ et $y_2$, respectivement, les encombrements latéraux d'un injecteur de gaz "droit" disposé obliquement à travers la paroi 1 du four et d'un injecteur suivant l'invention. Il apparaît clairement que l'encombrement $y_2$ de l'injecteur suivant l'invention est sensiblement plus faible que celui ($y_1$) de l'injecteur droit classique, conformément à l'un des objectifs que l'on s'est fixé.

Bien que les axes 11 et 15 soient normalement contenus dans un plan voisin d'un plan horizontal, il est généralement nécessaire d'ajuster la position de l'axe 11 en fonction des particularités du four. Celles-ci peuvent tenir, par exemple, à la position des électrodes 4, 5 et 6 qui peut varier d'un modèle de four à un autre. Le jets de gaz oxygéné sortant des injecteurs doivent s'écarter suffisamment de ces électrodes pour ne pas risquer d'oxyder celles-ci. Il en est de même à l'égard de la surface de la charge en fusion et de la surface interne de la paroi latérale du four.

Suivant l'invention on règle simplement, avant la mise en place du matériau réfractaire dans l'espace 21, la position de l'axe 11 du jet de gaz oxygéné, par une rotation de l'injecteur d'amplitude angulaire adéquate, autour de l'axe 15. Le palier 19 de support de l'injecteur guide cette rotation.

Suivant une autre caractéristique de l'invention, on assure la résistance de l'injecteur aux hautes températures régnant dans le four, en disposant des moyens de réfrigération dans la tête de l'injecteur. Ces moyens sont alimentés par une source (non représentée) d'un réfrigérant tel que de l'eau froide et comprennent, par exemple, un serpentin 22 raccordé à cette source par un conduit d'alimentation 23. Le serpentin 22 et le conduit peuvent être réalisés avec un tube de cuivre, par exemple, convenablement conformé. Après formage le tube est placé dans un moule conforme à la surface extérieure de l'injecteur, moule dans lequel on coule ensuite du cuivre en fusion qui s'amalgame à celui du tube pour assurer un parfait échange thermique entre le fluide de refroidissement et l'injecteur. En variante, l'injecteur pourrait présenter une configuration en double enveloppe traversée par une circulation d'eau de refroidissement.

Suivant une autre caractéristique de l'invention qui apparaît à la figure 2, la tête de l'injecteur présente une face d'extrémité 24 inclinée d'un angle $(\pi/2)-\alpha$ sur l'axe 11 de la tête de manière à s'inscrire dans la face interne 1" de la paroi 1. Cette disposition permet d'alimenter le four verticalement par gravité, suivant son axe X, sans risque d'endommager les injecteurs. En effet les morceaux de ferraille qui tombent alors dans le four ne peuvent heurter les têtes des injecteurs, entièrement escamotées dans la paroi du four. Grâce à cette disposition, on accroît encore la durée de vie des injecteurs.

Avantageusement, la surface du passage de gaz de l'injecteur est polie pour limiter l'accrochage et l'accumulation de projections de laitier et de métal, et pour favoriser leur évacuation par soufflage de gaz oxygéné. La face d'extrémité 24 de l'injecteur peut aussi être recouverte d'un matériau réfractaire du type céramique, propre à protéger l'injecteur du rayonnement intérieur au four.

Avantageusement encore, suivant l'invention, on prévoit des injecteurs de gaz oxygéné à forte section de passage de gaz, par exemple de l'ordre de 4 à 6 cm de diamètre, qui assure à débit égal, et à une vitesse inférieure ou égale à celle du son, un brassage des gaz dans le four plus efficace qu'avec une section de plus faible surface.

Avantageusement encore, suivant l'invention, on choisit un angle α tel que :

$$20° < \alpha < 60°$$

une valeur de α de l'ordre de 30 à 40° étant préférée. On évite ainsi aussi bien l'oxydation des électrodes que la perforation des parois du four par des jets trop "tangentiels".

De plus, la configuration coudée de l'injecteur suivant l'invention permet de limiter les risques de bouchage par des projections de laitier ou de métal en fusion et d'endommagement du clapet anti-retour.

On a construit un four mettant en oeuvre les enseignements de la présente invention. Grâce à ceux-ci on a pu obtenir une diminution importante du temps de fusion de la charge ainsi que de la consommation d'énergie électrique nécessaire, ceci en combinaison avec un accroissement de la durée de vie des injecteurs (supérieure à trois mois) et une absence de surchauffe localisée des panneaux constituant les parois du four. De manière non moins avantageuse, la surface des fenêtres à ménager dans la paroi du four pour le passage des injecteurs est diminuée de 25 à 50% par rapport à celle nécessaire au passage d'injecteurs droits.

Bien entendu l'invention n'est pas limitée au mode de réalisation décrit et représenté qui n'a été donné qu'à titre d'exemple. Ainsi les enseignements de la présente invention pourraient être mis en oeuvre dans un injecteur constitué d'organes séparés, corps, tête, serpentin etc. ... et assemblés par tous moyens classiques autres que la coulée dans un moule, bien que cette dernière technique soit préférée.

**Revendications**

1. Four de fusion de charge ayant une paroi latérale comportant au moins une fenêtre dans laquelle est disposé un injecteur de gaz oxygéné comprenant une partie d'extrémité définissant un passage de sortie non orthogonal à la paroi du four, caractérisé en ce que l'injecteur comprend un ensemble d'un corps allongé (16) ayant une direction principale, définissant un passage d'entrée de gaz connectable à une canalisation d'alimentation en gaz oxygéné, et d'une tête (14) définissant le passage de sortie de gaz (11) prolongeant le passage d'entrée en formant avec celui-ci un angle prédéterminé (α), la tête (14) et la fenêtre (20) étant dimensionnées pour que la tête soit sensiblement entièrement disposée dans l'épaisseur de la paroi (1).

2. Four selon la revendication 1, caractérisé en ce que la tête (14) présente une face d'extrémité (24) sensiblement orthogonale à la direction principale.

3. Four selon la revendication 1 ou 2, caractérisé en ce qu'il comporte des moyens (19) de support en rotation de l'injecteur coopérant avec le corps (16).

4. Four selon la revendication 2 ou 3, caractérisé en ce que la face d'extrémité (24) est sensiblement coplanaire à la face interne (1") de la paroi (1).

5. Four selon l'une des revendications 1 à 4, caractérisé en ce que la surface des passages d'entrée et de sortie de l'injecteur (7-9) est polie.

6. Four selon l'une des revendications précédentes, caractérisé en ce qu'il comporte des moyens (22, 23) de refroidissement de la tête (14) de l'injecteur (7-9).

7. Four selon la revendication 6, caractérisé en ce que les moyens de refroidissement comprennent un circuit (22, 23) de fluide réfrigérant au moins partiellement noyé dans l'injecteur.

8. Four selon l'une des revendications précédentes, caractérisé en ce que la tête (14) et le corps (16) de l'injecteur sont monobloc.

9. Four selon l'une des revendications précédentes, caractérisé en ce qu'il comprend au moins deux injecteurs (7-9) espacés angulairement et orientés pour souffler des jets de gaz oxygéné dans des directions sensiblement tangentielles dans le four.

**Patentansprüche**

1. Schmelzofen für Chargen, mit einer Seitenwand, die zumindest ein Fenster aufweist, in welchem eine Einblasdüse für sauerstoffreiches Gas angeordnet ist, welches einen Endbereich aufweist, der einen zu der Wand des Ofens nicht orthogonalen Ausgangsdurchtritt festlegt, dadurch gekennzeichnet, daß die Einblasdüse eine Baugruppe aufweist aus einem länglichen Körper (16) mit einer Hauptrichtung, welche einen Gaseingangsdurchtritt festlegt, der mit einem Kanal zur Versorgung mit sauerstoffreichem Gas verbindbar ist, und aus einem Kopf (14), welcher den Gasausgangsdurchtritt (11) festlegt, der den Eingangsdurchtritt verlängert, wobei er mit ihm einen vorbestimmten Winkel (a) bildet, wobei der Kopf (14) und das Fenster (20) derart dimensioniert sind, damit der Kopf im wesentlichen vollständig innerhalb der Dicke der Wand (1) angeordnet ist.

2. Ofen nach Anspruch 1, dadurch gekennzeichnet, daß der Kopf(14) eine im wesentlichen zu der Hauptrichtung orthogonale Endfläche (24) aufweist.

3. Ofen nach Anspruch 1 oder 2, dadurch gekennzeichnet, daß er mit dem Körper (16) zusammenwirkende Drehlager-Einrichtungen (19) für die Einblasdüse aufweist.

4. Ofen nach Anspruch 2 oder 3, dadurch gekennzeichnet, daß die Endfläche (24) im wesentlichen koplanar zu der Innenfläche (1") der Wand (1) ist.

**5.** Ofen nach einem der Ansprüche 1 bis 4, dadurch gekennzeichnet, daß die Oberfläche der Eingangs- und Ausgangsdurchtritte der Einblasdüse (7-9) poliert ist.

**6.** Ofen nach einem der vorhergehenden Ansprüche, dadurch gekennzeichnet, daß er Einrichtungen (22, 23) zum Kühlen des Kopfes (14) der Einblasdüse (7-9) aufweist.

**7.** Ofen nach Anspruch 6, dadurch gekennzeichnet, daß die Einrichtungen zum Kühlen einen zumindest teilweise in der Einblasdüse eingebetteten Kühlfluidkreis (22, 23) aufweisen.

**8.** Ofen nach einem der vorhergehenden Ansprüche, dadurch gekennzeichnet, daß der Kopf (14) und der Körper (16) der Einblasdüse einstückig ausgebildet sind.

**9.** Ofen nach einem der vorhergehenden Ansprüche, dadurch gekennzeichnet, daß er zumindest zwei winkelmäßig beabstandete und ausgerichtete Einblasdüsen (7-9) aufweist, um Strahlen sauerstoffreichen Gases in im wesentlichen tangentialen Richtungen in den Ofen zu blasen.

**Claims**

**1.** Charge-melting furnace having a side wall comprising at least one window in which there is disposed an oxygenated gas injector comprising an end part defining an outlet passage which is not orthogonal to the wall of the furnace, characterized in that the injector comprises an assembly made up of an elongated body (16) having one main direction and defining a gas inlet passage which is connectable to a pipe system for feeding oxygenated gas, and of a head (14) defining the gas outlet passage (11) constituting a prolongation of the inlet passage while forming a predetermined angle ($\alpha$) with the latter, the head (14) and the window (20) being dimensioned so that the head is substantially arranged entirely in the thickness of the wall (1).

**2.** Furnace according to claim 1, characterized in that the head (14) has an end face (24) which is substantially orthogonal to the main direction.

**3.** Furnace according to claim 1 or 2, characterized in that it comprises means (19) for supporting the injector in rotation that cooperate with the body (16).

**4.** Furnace according to claim 2 or 3, characterized in that the end face (24) is substantially coplanar with the internal face (1") of the wall (1).

**5.** Furnace according to one of claims 1 to 4, characterized in that the surface of the inlet and outlet passages of the injector (7-9) is polished.

**6.** Furnace according to one of the preceding claims, characterized in that it comprises means (22, 23) for cooling the head (14) of the injector (7-9).

**7.** Furnace according to claim 6, characterized in that the cooling means comprise a refrigerating fluid circuit (22, 23) which is at least partially embedded in the injector.

**8.** Furnace according to one of the preceding claims, characterized in that the head (14) and the body (16) of the injector are made in one piece.

**9.** Furnace according to one of the preceding claims, characterized in that it comprises at least two injectors (7-9) which are spaced apart angularly and are oriented so as to blow jets of oxygenated gas in substantially tangential directions in the furnace.

FIG.: 1

FIG.: 2